# EUROPEAN PATENT SPECIFICATION

(11) **EP 2 726 755 B1**
(45) Date of publication and mention of the grant of the patent: **19.08.2015**
(21) Application number: 12735661.6
(22) Date of filing: 21.06.2012
(51) Int. Cl.: F16G 5/16

(54) **DRIVE BELT COMPRISING DIFFERENT TYPES OF TRANSVERSE MEMBERS FOR A CONTINUOUSLY VARIABLE TRANSMISSION**
ANTRIEBSRIEMEN MIT VERSCHIEDENEN TYPEN VON TRAVERSEN FÜR EIN STUFENLOSES GETRIEBE
COURROIE D'ENTRAÎNEMENT COMPRENANT DIFFÉRENTS TYPES D'ÉLÉMENTS TRANSVERSAUX POUR UNE TRANSMISSION À VARIATION CONTINUE

(30) Priority: 30.06.2011 NL 1038910
(43) Date of publication of application: 07.05.2014
(73) Proprietor: Robert Bosch GmbH, 70442 Stuttgart (DE)
(72) Inventor: VAN DER SLUIS, Francis, Maria, Antonius, NL-5271 HP Sint-Michielsgestel (NL); JONKERS, Joost, Johannes, Cornelis, NL-5126 BH Gilze (NL); DE KUYPER, Dirk, Johannes, NL-5213 ST's Hertogenbosch (NL); VAN DER VELDE, Arie, NL-5014 LW Tilburg (NL); DELADI, Elena, Loredana, NL-5508 MZ Veldhoven (NL); FARAON, Irinel, Cosmin, NL-5056 JL Berkel-Enschot (NL); HUPKES, Ingmarus, Geert, NL-5000 AM Tilburg (NL)
(74) Representative: Plevier, Gabriel Anton Johan Maria
(86) International application number: PCT/NL2012/000038
(87) International publication number: WO 2013/002632

(56) References cited:
- DE-C- 849 944
- GB-A- 2 038 990
- JP-A- 2004 028 200
- JP-A- 2011 089 588
- US-A- 6 102 823

## Description

The present invention relates to a drive belt for a continuously variable transmission, which is in particular destined to be arranged around two pulleys of the transmission and which comprises a plurality of discrete transverse elements or members for contacting the transmission pulleys, as well as one or more endless carriers for carrying the transverse members for supporting and guiding the transverse members in between the pulleys. The present type of drive belt is also known as a push belt. An example of a prior art drive belt is JP2011089588,

Each endless carrier of the drive belt is typically composed of a plurality of mutually nested, continuous flexible metal bands and is also known as a ring set. Each endless carrier is at least partly inserted in a recess provided in the transverse members. In case the drive belt comprises only one endless carrier, such carrier is typically mounted in a central recess of the transverse members that opens towards the radial outside of the drive belt. However, usually the drive belt is provided with at least two endless carriers that are each mounted in a respective one of two recesses of the transverse members, which recesses then open towards a respective axial or lateral side of the transverse members, i.e. of the drive belt.

The transverse members of the drive belt are slidingly arranged along the circumference of the endless carrier or carriers in a virtually continuous row, such that these members are able to transmit forces which are related to a movement of the drive belt. The transverse members have two main body surfaces which, at least partly, extend substantially parallel with respect to each other and which are separated from each other over the (local) thickness of the transverse member by a side surface. The transverse members are relatively thin, such that a several hundreds thereof are present in the drive belt, allowing the belt to curve along its circumference by the mutual relative rotation of subsequent transverse members. Parts of the side surface of the transverse members, which parts are predominantly oriented in the axial direction, i.e. widthwise, are corrugated and are intended for frictionally contacting the transmission pulleys, in particular by being clamped widthwise between two conical sheaves of such pulleys.

The friction contact between the transverse members and the pulley sheaves allows a force to be transmitted there between, such that the drive belt can transfer a drive torque and rotational movement from one transmission pulley to the other. Such transfer mechanical power by friction is inevitably associated with energy loss, because heat is generated in the said friction contact. It is a general development aim of the relevant art to reduce such energy loss and thus to improve to the efficiency of the power transfer.

According to the present invention this aim may be realized in the design of the drive belt, in particular the transverse members thereof, such that only a part of the plurality of transverse members of the drive belt will actually be clamped between the pulley sheaves in the transmission. In this manner, energy losses due to friction and/or elastic deformation could be reduced during operation of the transmission and, hence, the efficiency of the torque transmission was improved. This novel design of the drive belt can naturally be realized by applying both wider, i.e. pulley sheave contacting, and narrower, i.e. non-contacting, transverse members therein. Thus, the drive belt according to the invention comprises two types of transverse members that are mutually distinguishable by, at least, their respective axial or width dimension.

According to the present invention, preferably between one and two thirds of the plurality of, i.e. of the total number of, transverse members of the drive belt, is provided with a smaller width, i.e. is narrower, than the remaining two to one thirds of the transverse members of the drive belt. More preferably, the two types of transverse members are included in the drive belt along the circumference in a (self-) repeating pattern that is based on the relative abundance of the said two types. For example, in case the two types of transverse members are present in equal numbers, the shortest possible self-repeating pattern would thus be one after the other, i.e. alternating.

The invention will be explained in more detail on the basis of the following description of the invention with reference to the drawing and in relation to a preferred embodiment thereof. In the drawing figures equal reference signs indicate equal or similar structures and/or parts.
Figure 1 provides a schematic perspective view of the continuously variable transmission with a drive belt running over two pulleys.
Figure 2 is a schematic illustration of a part of the known drive belt, which includes two sets of a number of flexible rings, as well as a plurality of transverse members.
Figure 3 provides a schematic top-view of a section of the known drive belt.
Figure 4 provides a schematic top-view of a section of a drive belt in accordance with the present invention.
Figure 5 provides a graph of transmission efficiency in relation to transmission speed ratio in a comparison between the known and the novel drive belt.

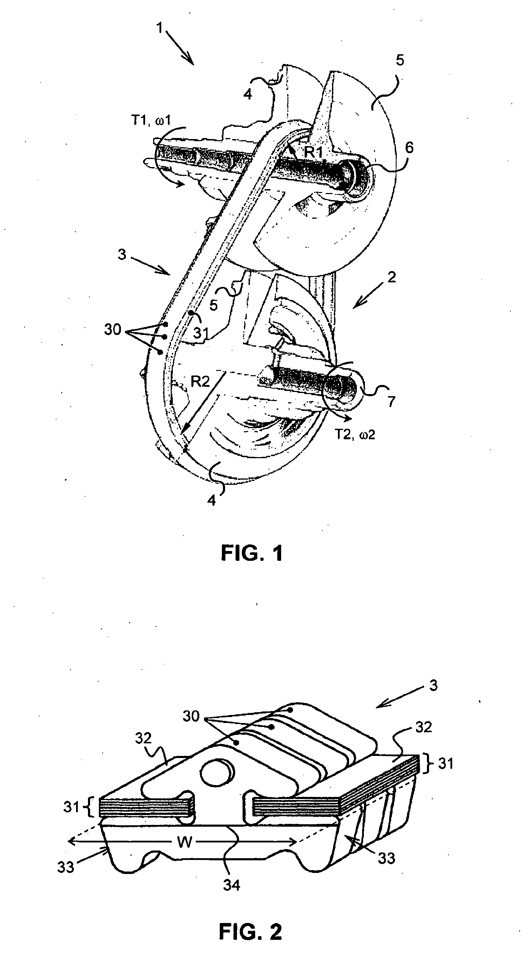

The schematic illustration of a continuously variable transmission (CVT) in Figure 1 shows a drive belt 3 which is wrapped around two pulleys 1 and 2 and which includes two separate endless carriers 31, as well as a plurality of transverse members 30 that are mounted on and arranged along the circumference of these carriers 31 in an essentially contiguous row. When it is clamped between the two conical pulley discs 4, 5 of the pulleys 1, 2, the drive belt 3 is able to transmit a torque "T" and an accompanying rotational movement "ω" between these pulleys 1, 2 to the other 2, 1. At the same time, the running radii R of the drive belt 3 between the discs 4, 5 of the respective pulleys 1, 2 determine the (speed) ratio "i" of the CVT, i.e. the ratio between the rotational speeds of the respective pulleys 1, 2. This CVT and its principal operation are known per se.

An example of a known drive belt 3 is shown in more detail figure 2 in a section of three transverse members 30 thereof. In this figure 2 it is shown that the endless carriers 31 are each made up of a set of mutually nested, flat and flexible rings 32. The transverse members 30 of the drive belt 3 are arranged in mutual succession along the circumference of the carriers 31, in such manner that they can slide relative to and in the circumference direction of the carriers 31. The transverse members 30 take-up a clamping force exerted between the discs 4, 5 of each pulley 1, 2 via pulley contact faces 33 that are provided on either lateral side thereof. These pulley contact faces 33 are mutually diverging in radial outward direction to essentially match the V-angle defined between the conically-shaped pulley discs 4, 5 of each pulley 1, 2. A so-called rocking edge 34 represents the transition between a radially outer part of the transverse member 30 of constant thickness and a tapered radial inner part thereof. This shape and rocking edge 34 of the transverse members 30 is what allows the drive belt 3 to follow a smoothly curved trajectory.

Hereinafter, the term "width W" is used in relation to the transverse member 30 and indicates the largest lateral or axial distance between the pulley contact faces 33 thereof. In the known drive belt 3, all transverse members 30 thereof are provided with essentially the same width W dimension. In fact, such width W is controlled according to a very narrow tolerance between the said transverse members 30 of the drive belt 3 to equalize the mechanical load exerted on the transverse members 30 during operation.

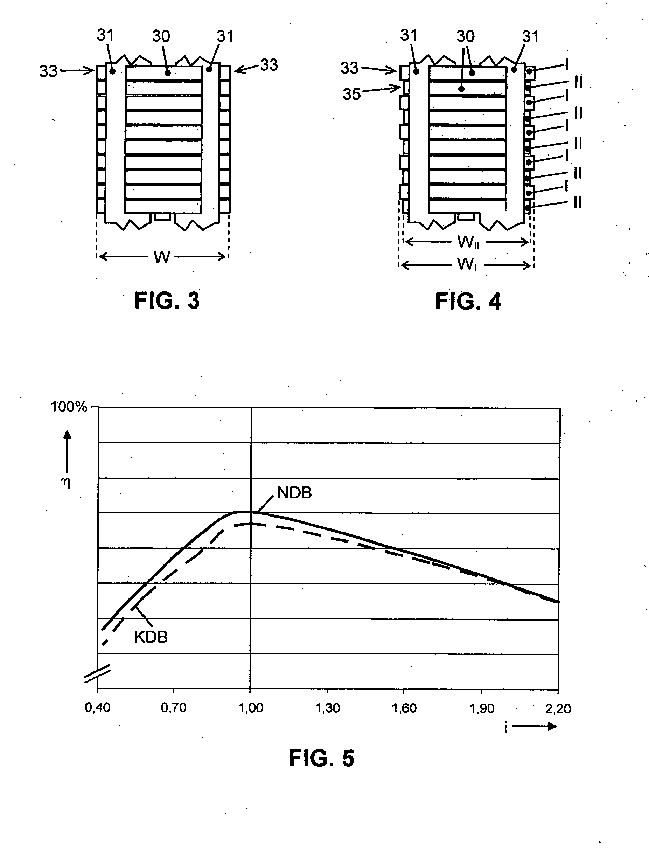

In figure 3 again a section of the known drive belt 3 is shown, however in this case in a schematic top or radially inwardly oriented view of a section of ten transverse members 30. This figure 3 too illustrates that the transverse members 30 of the drive belt 3 are provided with essentially the same width W.

According to the present invention the efficiency of the CVT, in particular of the torque transmission by the drive belt 3, can be significantly improved, if not every transverse member 30 thereof arrives in friction contact with the pulley discs 4, 5. In accordance with the invention, the latter requirement can be realized by providing the drive belt 3 with at least differently shaped transverse members 30, such that a first type "I" of transverse member 30 has a width "W_{I}" that is larger than the width "W_{II}" of a second type "II" of transverse member 30, as is schematically illustrated in figure 4. In the drive belt 3 according to the invention only the transverse members 30 of the first type I will thus arrive in actual friction contact with the pulleys 1, 2 through their pulley contact faces 33; The transverse members 30 of the second type II, more in particular the lateral side faces 35 thereof, do not.

Indeed, it has been found that, although torque transmission by friction is inevitably associated with energy loss, such energy loss could be reduced by reducing the number of individual pulley contact surfaces, i.e. the number of transverse members actually taking part in the frictional contact between a pulley 1, 2 and the drive belt 3. In a sense, the present invention reconciles the existing technical desire to provide the pulley contact surfaces 33 of the individual transverse member 30 with a large dimension in the radial direction and with a small dimension in the circumferential direction of the drive belt 3 with the likewise existing technical desire to minimize the number of (frictional) contacts between the drive belt 3 and the pulleys 1, 2.

The efficiency η (i.e. 100% minus energy losses) of the power transmission by the CVT that is obtained with the novel drive belt 3 in accordance with figure 4 of the invention is plotted in the graph of figure 5 in relation to the transmission speed ratio i (solid line "NDB") and also in comparison with the efficiency obtained with the known drive 3 belt of figure 3 in the same CVT and under the same operational conditions (dashed line "KDB").

It will be clear to a person skilled in the art that the scope of the present invention is not limited to the examples discussed above, but that several amendments and modification thereof are possible without deviating from the scope of the invention as defined in the appended claims.

## Claims

1. Drive belt (3) with an endless carrier (31) and a number of transverse members (30) that are provided on the endless carrier (31)and that can slide relative to and in the circumference direction of such endless carrier (31), of which transverse members (30) at least two types (I, II) of mutually different shape are included in the drive belt (3), **characterised in that**, a largest width (W_{I}), i.e. a largest axial dimension (W_{I}) of a first transverse member type (I) is larger than a largest width dimension (W_{II}) of a second transverse member type (II).

2. Drive belt (3) according to claim 1, **characterised in that** of the total number of transverse members (30) included in the drive belt (3) at least one third and at most two thirds is of the first transverse member type (I).

3. Drive belt (3) according to claim 1 or 2, **characterised in that** the transverse members (30) of the first transverse member type (I) and the transverse members (30) of the second transverse member type (II) are included in the drive belt (3) in a regular, self-repeating pattern.

4. Drive belt (3) according to claim 1, **characterised in that** the transverse members (30) of the first transverse member type (I) and the transverse members (30) of the second transverse member type (II) are included in the drive belt (3) in approximately equal amounts.

5. Drive belt (3) according to claim 1 or 4, **characterised in that** the transverse members (30) of the first transverse member type (I) and the transverse members (30) of the second transverse member type (II) are included in the drive belt (3) in a mutually alternating pattern.

## Patentansprüche

1. Antriebsriemen (3) mit einem Endlosträger (31) und einer Anzahl an Traversen (30), die auf dem Endlosträger (31) vorgesehen sind und die bezüglich eines derartigen Endlosträgers (31) und in der Umfangsrichtung desselben gleiten können, wobei von den Traversen (30) mindestens zwei Arten (I, II), die eine unterschiedliche Form bezüglich einander aufweisen, in dem Antriebsriemen (3) enthalten sind, **dadurch gekennzeichnet, dass** eine größte Breite (W_{I}), d.h. eine größte axiale Dimension (W_{I}), einer ersten Traversenart (I) größer als eine größte Breitendimension (W_{II}) einer zweiten Traversenart (II) ist.

2. Antriebsriemen (3) nach Anspruch 1, **dadurch gekennzeichnet, dass** von der Gesamtanzahl an Traversen (30), die in dem Antriebsriemen (3) enthalten sind, mindestens ein Drittel und höchstens zwei Drittel von der ersten Traversenart (I) sind.

3. Antriebsriemen (3) nach Anspruch 1 oder 2, **dadurch gekennzeichnet, dass** die Traversen (30) der ersten Traversenart (I) und die Traversen (30) der zweiten Traversenart (II) in dem Antriebsriemen (3) in einem regelmäßigen, sich wiederholenden Muster enthalten sind.

4. Antriebsriemen (3) nach Anspruch 1, **dadurch gekennzeichnet, dass** die Traversen (30) der ersten Traversenart (I) und die Traversen (30) der zweiten Traversenart (II) in dem Antriebsriemen (3) in ungefähr gleichen Mengen enthalten sind.

5. Antriebsriemen (3) nach Anspruch 1 oder 4, **dadurch gekennzeichnet, dass** die Traversen (30) der ersten Traversenart (I) und die Traversen (30) der zweiten Traversenart (II) in dem Antriebsriemen (3) in einem sich gegenseitig abwechselnden Muster enthalten sind.

## Revendications

1. Courroie d'entraînement (3) comprenant un support sans fin (31) et un certain nombre d'éléments transversaux (30) qui sont prévus sur le support sans fin (31) et qui peuvent glisser par rapport à un tel support sans fin (31) et dans la direction circonférentielle de celui-ci, parmi lesquels éléments transversaux (30) au moins deux types (I, II) de formes mutuellement différentes sont compris dans la courroie d'entraînement (3), **caractérisée en ce qu'**une largeur la plus grande (W_{I}), c'est-à-dire une dimension axiale la plus grande (W_{I}), d'un premier type d'éléments transversaux (I) est supérieure à une dimension en largeur la plus grande (W_{II}) d'un deuxième type d'éléments transversaux (II).

2. Courroie d'entraînement (3) selon la revendication 1, **caractérisée en ce que**, parmi le nombre total d'éléments transversaux (30) compris dans la courroie d'entraînement (3), au moins un tiers et au plus deux tiers sont du premier type d'éléments transversaux (I).

3. Courroie d'entraînement (3) selon la revendication 1 ou 2, **caractérisée en ce que** les éléments transversaux (30) du premier type d'éléments transversaux (I) et les éléments transversaux (30) du deuxième type d'éléments transversaux (II) sont compris dans la courroie d'entraînement (3) suivant un motif régulier se répétant.

4. Courroie d'entraînement (3) selon la revendication 1, **caractérisée en ce que** les éléments transversaux (30) du premier type d'éléments transversaux (I) et les éléments transversaux (30) du deuxième type d'éléments transversaux (II) sont compris dans la courroie d'entraînement (3) en des quantités approximativement égales.

5. Courroie d'entraînement (3) selon la revendication 1 ou 4, **caractérisée en ce que** les éléments transversaux (30) du premier type d'éléments transversaux (I) et les éléments transversaux (30) du deuxième type d'éléments transversaux (II) sont compris dans la courroie d'entraînement (3) suivant un motif mutuellement alterné.
